# EUROPEAN PATENT APPLICATION

(11) **EP 4 597 326 A1**
(43) Date of publication of application: **06.08.2025**
(21) Application number: 23880256.5
(22) Date of filing: 19.10.2023
(51) Int. Cl.: G06F 12/02, G06F 3/06

(54) **METHOD FOR PERFORMING GARBAGE COLLECTION, AND ELECTRONIC DEVICE SUPPORTING SAME**

(30) Priority: 20.10.2022 KR 20220135900; 09.11.2022 KR 20220148892
(71) Applicant: Samsung Electronics Co., Ltd., Suwon-si, Gyeonggi-do 16677 (KR)
(72) Inventor: KIM, Junho, Suwon-si, Gyeonggi-do 16677 (KR); LEE, Changheun, Suwon-si, Gyeonggi-do 16677 (KR); HYUN, Sunghwan, Suwon-si, Gyeonggi-do 16677 (KR); JUNG, Wonsuk, Suwon-si, Gyeonggi-do 16677 (KR)
(74) Representative: Appleyard Lees IP LLP
(86) International application number: PCT/KR2023/016256
(87) International publication number: WO 2024/085681

(57) **Abstract**

Disclosed is an electronic device including a storage device and a host. The host may be configured to, based on at least one information related to the electronic device, determine a start point of garbage collection (GC) to be performed by the storage device and throughput of the GC, based on the determination, transmit information related to the start point of the GC and the throughput of the GC to the storage device, identify whether an input/output (IO) occurs, while the GC is performed by the storage device, identify a property of the IO, based on occurrence of the IO, based on the property of the IO indicating a first property, determine to delay processing of the IO, to continue the GC performed by the storage device, and based on the property of the IO indicating a second property, control the storage device, such that the storage device at least temporarily pauses the GC and processes the IO.

## Description

### [Technical Field]

Embodiments of the disclosure relate to a method for performing garbage collection and an electronic device supporting the same.

### [Background Art]

With advance of digital convergence which combines various information and communication technologies, an electronic device is providing various functions or services incorporated into its core functions. In response to this, efficient management of a memory which stores information related to the function or the service is rising, and various technologies are applied to the electronic device to improve performance of the memory. For example, the electronic device may perform so-called garbage collection (GC), which secures a free block by releasing a block not valid any more among memory blocks dynamically allocated by a program.

The foregoing may be provided as related art for the purpose of aiding understanding of the disclosure. No claim or determination is made as to whether any of the foregoing may be applied as the prior art in connection with the disclosure.

### [Disclosure of Invention]

### [Solution to Problem]

An electronic device according to an embodiment of the disclosure may include a storage device and a host electrically connected to the storage device.

According to an embodiment, the host may be configured to, based on at least one information related to the electronic device, determine a start point of garbage collection (GC) to be performed by the storage device and throughput of the GC, based on the determination, transmit information related to the start point of the GC and the throughput of the GC to the storage device, identify whether an input/output (IO) occurs, while the GC is performed by the storage device, identify a property of the IO, based on occurrence of the IO, based on the property of the IO indicating a first property, determine to delay processing of the IO, to continue the GC performed by the storage device, and based on the property of the IO indicating a second property, control the storage device, such that the storage device at least temporarily pauses the GC and processes the IO.

A method for performing GC of an electronic device may include, based on at least one information related to the electronic device, determining, at a host of the electronic device, a start point of the GC to be performed by the storage device and throughput of the GC, based on the determination, transmitting, at the host, information related to the start point of the GC and the throughput of the GC to the storage device, identifying, at the host, whether an IO occurs, while the GC is performed by the storage device, identifying, at the host, a property of the IO, based on occurrence of the IO, based on the property of the IO indicating a first property, determining, at the host, to delay processing of the IO, to continue the GC performed by the storage device, and, based on the property of the IO indicating a second property, controlling, at the host, the storage device, such that the storage device at least temporarily pauses the GC and processes the IO.

In a computer readable storage medium recording a program for executing a method for performing GC of an electronic device, the program may execute, based on at least one information related to the electronic device, determining, at a host of the electronic device, a start point of the GC to be performed by the storage device and throughput of the GC, based on the determination, transmitting, at the host, information related to the start point of the GC and the throughput of the GC to the storage device, identifying, at the host, whether an IO occurs, while the GC is performed by the storage device, identifying, at the host, a property of the IO, based on occurrence of the IO, based on the property of the IO indicating a first property, determining, at the host, to delay processing of the IO, to continue the GC performed by the storage device, and, based on the property of the IO indicating a second property, controlling, at the host, the storage device, such that the storage device at least temporarily pauses the GC and processes the IO.

### [Brief Description of Drawings]

FIG. 1 is a diagram illustrating an electronic device in a network environment according to various embodiments.
FIG. 2 is a diagram illustrating components of an electronic device according to an embodiment.
FIG. 3 is a diagram illustrating an example of determining a garbage collection (GC) start point according to an embodiment.
FIG. 4 is a diagram illustrating another example of determining a GC start point according to an embodiment.
FIG. 5 is a diagram illustrating yet another example of determining a GC start point according to an embodiment.
FIG. 6 is a diagram illustrating an example of determining GC throughput according to an embodiment.
FIG. 7 is a diagram illustrating another example of determining GC throughput according to an embodiment.
FIG. 8 is a diagram illustrating yet another example of determining GC throughput according to an embodiment.
FIG. 9 is a diagram illustrating an example of signal flows between a host and a storage device to perform GC according to an embodiment.
FIG. 10 is a diagram illustrating another example of signal flows between a host and a storage device for performing GC according to an embodiment.
FIG. 11 is a diagram illustrating yet another example of signal flows between a host and a storage device for performing GC according to an embodiment.

In relation to the description of the drawings, like or similar reference numerals may be used for like or similar components.

### [Mode for the Invention]

Garbage collection (GC) has been performed in a manner that a controller integrated with a memory itself determines a start point, an occupation duration, and/or throughput of the GC, based on information related to the memory (e.g., GC policy of the memory and/or a block status of the memory). However, the GC which is limited to the memory information, which may not dynamically respond to an input/output (IO) occurring during its operation, may delay IO processing and further cause execution slowdown or execution suspension of a program related to the IO. In addition, the GC performed depending on the memory information does not consider a level required by the electronic device (or, a host) for the GC, and thus may degrade memory performance and/or GC efficiency.

Embodiments of the disclosure may provide a method for performing GC and an electronic device supporting the same, which may dynamically determine a GC start point and GC throughput based on at least one information related to the electronic device.

In addition, embodiments of the disclosure may provide a method for performing GC and an electronic device supporting the same, which may dynamically determine control on execution of the GC or processing of an IO based on a property of the IO occurring in the GC execution.

Hereinafter, various embodiments of the disclosure are described with reference to the attached drawings. However, it is not intended to limit the disclosure to specific embodiments, and should be understood to embrace various modifications, equivalents, and/or alternatives of the embodiments of the disclosure.

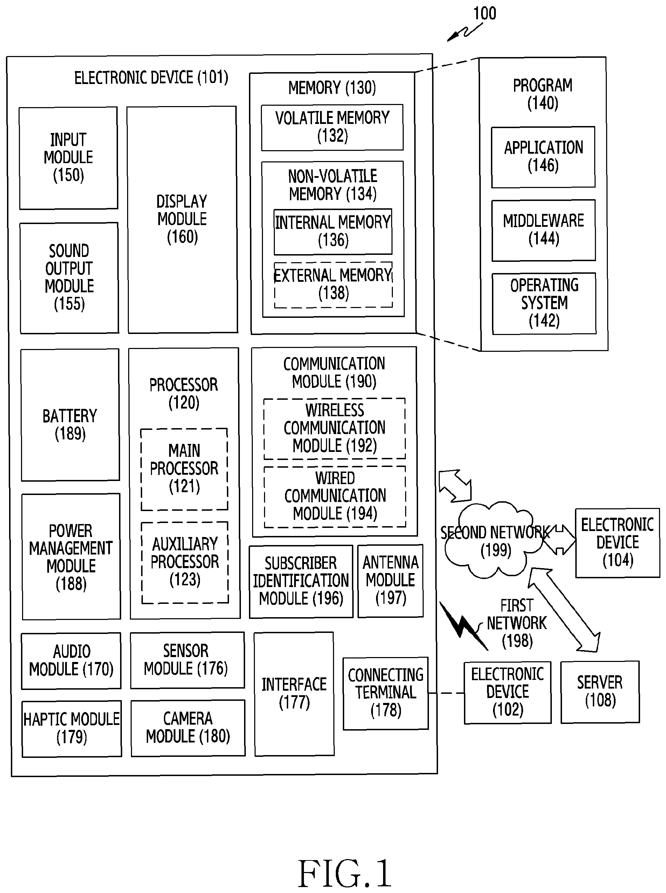

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be a device of various types. The electronic device may include, for example, a portable communication device (e.g., a smartphone), a computer device, a portable multimedia device, a portable medical device, a camera, a wearable device, or a home appliance. The electronic device according to an embodiment of the disclosure is not limited to the devices described above.

It should be appreciated that various embodiments of the disclosure and the terms used therein are not intended to limit technological features disclosed in this document to particular embodiments, and embrace various modifications, equivalents, or alternatives of a corresponding embodiment. With respect to the descriptions of the drawings, similar reference numerals may be used for similar or related elements. A singular form of a noun corresponding to an item may include one or more of the items, unless the relevant context clearly indicates otherwise. As used herein, each of such phrases as "A or B", "at least one of A and B", "at least one of A or B", "A, B, or C", "at least one of A, B, and C", and "at least one of A, B, or C", may include one, or all possible combinations of the items enumerated together in a corresponding one of the phrases. Such terms as "1st" and "2nd", or "first" and "second" may be used to simply distinguish a corresponding component from another, and do not limit the corresponding components in other aspect (e.g., importance or order). If an element (e.g., a first element) is referred to, with or without the term "operatively" or "communicatively", as "coupled" or "connected" to another element (e.g., a second element), it means that the element may be coupled with the other element directly (e.g., wiredly), wirelessly, or via a third element.

The term "module" used in the disclosure may include a unit implemented in hardware, software or firmware, and may be interchangeably used with a term, for example, logic, a logic block, a part, or circuitry. The module may be a single integral component, or a minimum unit or part thereof, for performing one or more functions. For example, according to an embodiment, the module may be implemented in a form of an application-specific integrated circuit (ASIC).

Various embodiments of the disclosure may be implemented as software (e.g., the program 140) including one or more instructions which are stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored in the storage medium, and execute it or them. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, 'non-transitory' simply means that the storage medium is a tangible device, and does not include a signal (e.g., an electromagnetic wave), but this term does not differentiate between a case where data is semi-permanently stored in the storage medium and a case where the data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or may be distributed (e.g., downloaded or uploaded) directly or online via an application store (e.g., Play Store^{™}) or between two user devices (e.g., smart phones). In the online distribution, at least a part of the computer program product may be temporarily stored in the machine-readable storage medium such as a memory of a manufacturer's server, an application store server, or a relay server, or may be temporarily generated.

According to various embodiments, each component (e.g., a module or a program) of the above-described components may include a single entity or multiple entities. According to various embodiments, one or more components or operations of the above-described components may be omitted, or one or more other components or operations may be added. Alternatively or additionally, a plurality of components (e.g., modules or programs) may be integrated as a single component. In this case, the integrated component may perform one or more functions of each component of the plurality of the components in the same or similar manner as they are performed by a corresponding component of the plurality of the components before the integration. According to various embodiments, operations performed by the module, the program or other component may be carried out sequentially, in parallel, repeatedly, or heuristically, one or more of the operations may be executed in a different order or omitted, or one or more other operations may be added.

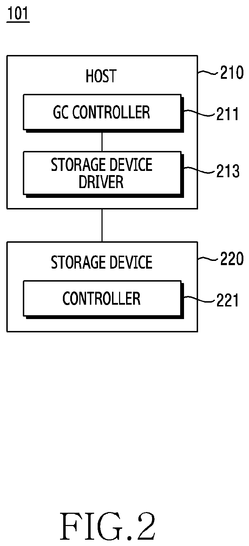

FIG. 2 is a diagram illustrating components of an electronic device according to an embodiment.

Referring to FIG. 2, an electronic device 101 according to an embodiment may include a host 210 and a storage device 220. In various embodiments, the electronic device 101 may further include an additional component, in addition to the host 210 and the storage device 220. For example, the electronic device 101 may further include at least one of a display module (e.g., the display module 160 of FIG. 1) for providing visual information, a communication module (e.g., the communication module 190 of FIG. 1) for supporting communication with an external electronic device, a battery (e.g., battery 189 of FIG. 1) for supplying power to the components of the electronic device 101, and a power management module (e.g., the power management modules 188 of FIG. 1) for managing the power of the battery. Also, for example, the electronic device 101 may further include at least one component not mentioned above among the components of the electronic device (e.g., the electronic device 101 of FIG. 1) mentioned in FIG. 1.

In an embodiment, the host 210 may be electrically connected to the components of the electronic device 101, to execute and control various functions supported by the electronic device 101. For example, the host 210 may execute programming language code to control general operations of the GC to be performed in the storage device 220. Also, for example, the host 210 may transfer (or, transmit) at least one command, signal, and/or data related to the GC execution to the storage device 220. According to various embodiments, the host 210 may include a central processing unit or an application processor (e.g., the main processor 121 of FIG. 1).

In an embodiment, the host 210 may include at least one of a GC controller 211 and a storage device driver 213. For example, the GC controller 211 may operate under the control of the host 210 to determine the start point of the GC and the throughput of the GC to be performed in the storage device 220, and to transfer (or, transmit) the determined at least one information to the storage device 220. For example, the GC controller 211 may determine the GC start point and the GC throughput, based on at least one of time information of the electronic device 101, state information (e.g., idle state information and/or charging state information) of the electronic device 101, state information (e.g., active/inactive state information of the screen) of the display module, operating system information (e.g., diskstats file information) of the electronic device 101, and lifetime information of the storage device 220. In addition, for example, the GC controller 211 may provide information related to the determined GC start point and GC throughput to the storage device 220 through the storage device driver 213 which functions as an interface between the host 210 and the storage device 220. According to various embodiments, the host 210 may not include the storage device driver 213, and the information related to the determined GC start point and GC throughput may be directly transferred from the GC controller 211 to the storage device 220. Alternatively, even if the host 210 includes the storage device driver 213, the information related to the determined GC start point and GC throughput may be directly transferred from the GC controller 211 to the storage device 220 by bypassing the storage device driver 213.

In an embodiment, the GC controller 211 may operate under the control of the host 210, to identify whether an IO occurs, while the GC is performed in the storage device 220. If identifying the IO occurred while the GC is performed, the GC controller 211 may transfer to the storage device 220 a command, a signal, and/or data related to continuing the GC, delaying IO processing, at least temporarily pausing the GC, and/or instantly processing the IO based on a property of the IO (e.g., information indicated by a flag of the IO).

According to various embodiments, the IO may include at least one of an IO generated by user manipulation or input to the electronic device 101, an IO generated by a program running in background on the electronic device 101, an IO generated by a system service executed in the background on the electronic device 101, and IO generated by interaction (e.g., communication) between the electronic device 101 and an external electronic device. Hereafter, the IO mentioned in describing the embodiments may be referred to at least one of the IOs of the above-mentioned types.

In an embodiment, the storage device 220 may operate under the control of the host 210 to perform the GC. For example, the storage device 220 may include a controller 221, and the controller 221 may perform the GC for releasing at least some of blocks of the storage device 220 based on the command, the signal, and/or the data (e.g., GC start point information and GC throughput information) transferred (or, received) from the host 210 (or, the GC controller 211). Also, for example, the controller 221 may continue the GC, or at least temporarily pause the GC and process the generated IO based on the command, the signal, and/or the data (e.g., GC continue information, IO processing delay information, at least temporary GC pause information, and/or instantaneous IO process information) transferred (or, received) from the host 210 (or, the GC controller 211) while performing the GC.

According to various embodiments, the storage device 220 may include a non-volatile memory (e.g., the non-volatile memory 134 of FIG. 1) including at least one of a one time programmable read only memory (OTPROM), a programmable ROM (PROM), an erasable and programmable ROM (EPROM), an electrically erasable and programmable ROM (EEPROM), a mask ROM, a flash ROM, a NAND flash memory, a NOR flash memory, a hard drive, and a solid state drive (SSD).

Hereafter, embodiments for dynamically controlling the GC execution of the storage device 220 shall be described, in reference to the drawings.

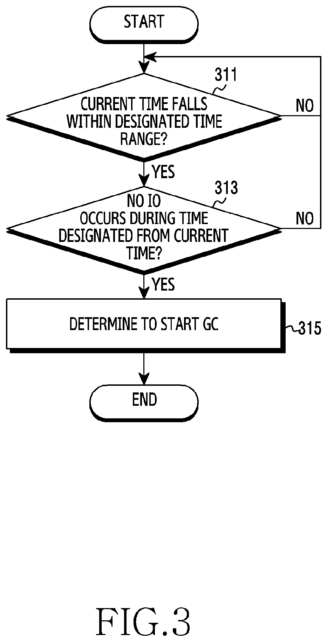

FIG. 3 is a diagram illustrating an example of determining a GC start point according to an embodiment.

Operations of the electronic device described in FIG. 3 may be performed sequentially, but may not necessarily be performed in sequence. For example, the order of operations described in FIG. 3 may be changed, or at least two operations may be performed in parallel.

Referring to FIG. 3, a host (e.g., the host 210 of FIG. 2) of an electronic device (e.g., the electronic device 101 of FIG. 2) according to an embodiment may determine the start point of the GC (or, GC timing) to be performed by a storage device (e.g., the storage device 220 of FIG. 2). For example, the host 210 may determine the start point of the GC to be performed in the storage device 220 based on time information of the electronic device 101 and IO occurrence information.

In this regard, in operation 311, the host 210 (or, the GC controller 211 of FIG. 2) may identify the time information indicated by the electronic device 101, and determine whether a current time falls within a designated time range. For example, the host 210 may determine whether the current time falls within the designated time range which is set by the user or set by default in the electronic device 101. According to various embodiments, the designated time range may be set to a time zone (e.g., late night hours or early morning hours) when there is less user operation for the electronic device 101 and/or interaction (e.g., communication) between the electronic device 101 and the external electronic device.

In an embodiment, if determining that the current time indicated by the time information of the electronic device 101 falls within the designated time range, the host 210 (or, the GC controller 211) may determine whether an IO occurs during a first time designated from the current time, in operation 313.

In an embodiment, if determining that no IO occurs for the first time designated from the current time, in operation 315, the host 210 (or, the GC controller 211) may determine to start the GC at a time after the designated first time elapses. In addition, the host 210 (or, the GC controller 211) may transfer (or, transmit) a command, a signal, and/or data including GC start point information to the storage device 220. According to various embodiments, the GC start point information may indicate a time substantially similar to the time of determining to start the GC, or a time plus a specific time (e.g., a time taken to transfer the GC start point information from the host 210 to the storage device 220) from the time of determining the start of the GC.

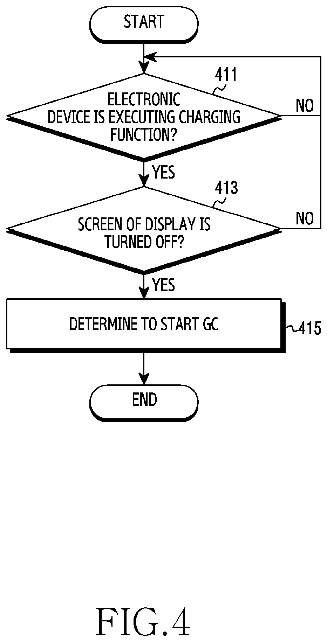

FIG. 4 is a diagram illustrating another example of determining a GC start point according to an embodiment.

Operations of the electronic device described in FIG. 4 may be performed sequentially, but may not necessarily be performed in sequence. For example, the order of operations described in FIG. 4 may be changed, or at least two operations may be performed in parallel.

Referring to FIG. 4, a host (e.g., the host 210 of FIG. 2) of an electronic device (e.g., the electronic device 101 of FIG. 2) according to an embodiment may determine a start point (or, GC timing) of the GC to be performed by a storage device (e.g., the storage device 220 of FIG. 2). For example, the host 210 may determine the start point of the GC to be performed in the storage device 220 based on state information (e.g., charging state information) of the electronic device 101 and state information (e.g., active/inactive state information of a screen) of a display module (e.g., the display module 160 of FIG. 1).

In this regard, in operation 411, the host 210 (or, the GC controller 211 of FIG. 2) may determine whether the electronic device 101 is executing a charging function. For example, the host 210 may request and obtain (or, receive) charging state information of a battery (e.g., the battery 189 of FIG. 1) from a power management module (e.g., the power management module 188 of FIG. 1) (or, a fuel gauge IC included in the power management module 188), and determine based on the charging state information of the battery 189 whether the electronic device 101 currently executes the charging function by wire and/or wirelessly.

In an embodiment, if determining based on the charging state information of the battery 189 that the electronic device 101 executes the charging function, in operation 413, the host 210 (or, the GC controller 211) may determine whether the screen of the display module 160 is disabled (or, turned off). For example, the host 210 may request and obtain (or, receive) screen state information from the display module 160 (or, a display driver IC included in the display module 160), and determine based on the screen state information whether the screen of the display module 160 is disabled.

In an embodiment, if determining that the screen of the display module 160 is disabled, in operation 415, the host 210 (or, the GC controller 211) may determine to start the GC, and transfer (or, transmit) a command, a signal, and/or data including start point information of the GC to the storage device 220. According to various embodiments, the GC start point information may indicate a time substantially similar to the time of determining to start the GC, or a time plus a specific time (e.g., a time taken to transfer the GC start point information from the host 210 to the storage device 220) from the time of determining the start of the GC.

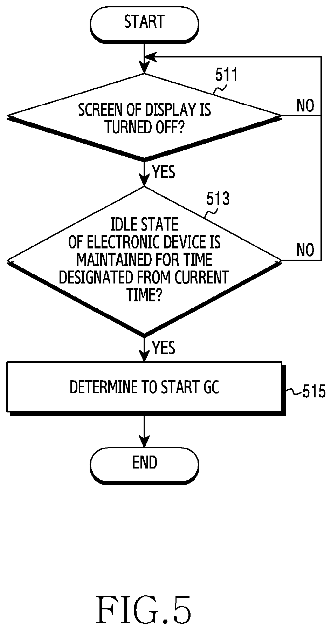

FIG. 5 is a diagram illustrating yet another example of determining a GC start point according to an embodiment.

Operations of the electronic device described in FIG. 5 may be performed sequentially, but may not necessarily be performed in sequence. For example, the order of operations described in FIG. 5 may be changed, or at least two operations may be performed in parallel.

Referring to FIG. 5, a host (e.g., the host 210 of FIG. 2) of an electronic device (e.g., the electronic device 101 of FIG. 2) according to an embodiment may determine a start point (or, GC timing) of the GC to be performed by a storage device (e.g., the storage device 220 of FIG. 2). For example, the host 210 may determine the start point of the GC to be performed in the storage device 220 based on state information (e.g., active/inactive state information of a screen) of a display module (e.g., the display module 160 of FIG. 1) and state information (e.g., idle state information) of the electronic device 101.

In this regard, in operation 511, the host 210 (or, the GC controller 211) may determine whether the screen of the display module 160 is disabled (or, turned off). For example, the host 210 may request and obtain (or, receive) state information of the screen from the display module 160 (or, the display driver IC included in the display module 160), and determine based on the screen state information whether the screen of the display module 160 is disabled.

In an embodiment, if determining that the screen of the display module 160 is disabled, in operation 513, the host 210 (or, the GC controller 211) may determine whether an idle state of the electronic device 101 is maintained. For example, the host 210 may determine whether the idle state of the electronic device 101 is maintained for a second time designated from the current time (e.g., a time of determining that the screen of the display module 160 is in the inactive state). According to various embodiments, the host 210 may determine that the idle state of the electronic device 101 is maintained for the designated second time, if the inactive state for the screen of the display module 160 is maintained for the second time designated from the current time, if no user manipulation or input to the electronic device 101 occurs for the second time designated from the current time, and/or if a posture of the electronic device 101 does not change for the second time designated from the current time.

In an embodiment, if determining that the idle state of the electronic device 101 is maintained for the designated second time, in operation 515, the host 210 (or, the GC controller 211) may determine to start the GC, and transfer (or, transmit) a command, a signal, and/or data including start point information of the GC to the storage device 220. According to various embodiments, the GC start point information may indicate a time substantially similar to the time of determining to start the GC, or a time plus a specific time (e.g., a time taken to transfer the GC start point information from the host 210 to the storage device 220) from the time of determining the start of the GC.

Although not depicted in FIG. 3, FIG. 4, or FIG. 5, according to embodiments, the host 210 (or, the GC controller 211) may determine the start point of GC to be performed in the storage device 220 based on a user input to the electronic device 101. For example, if receiving a user input indicating to perform the GC of the storage device 220 (e.g., memory optimization) through an interface related to system settings of the electronic device 101 or an interface related to a home screen of the electronic device 101, the host 210 may determine to start the CG and transfer (or, transmit) a command, a signal, and/or data including the GC start point information to the storage device 220.

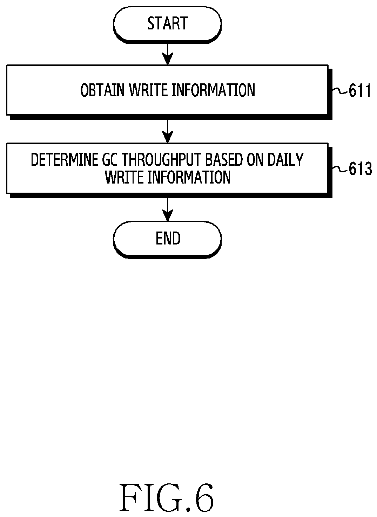

FIG. 6 is a diagram illustrating an example of determining GC throughput according to an embodiment.

Operations of the electronic device described in FIG. 6 may be performed sequentially, but may not necessarily be performed in sequence. For example, the order of operations described in FIG. 6 may be changed, or at least two operations may be performed in parallel.

Referring to FIG. 6, a host (e.g., the host 210 of FIG. 2) of an electronic device (e.g., the electronic device 101 of FIG. 2) according to an embodiment may determine throughput (or the number of free blocks to be secured by performing the GC, or a size of a free space to be secured by performing the GC) of the GC to be performed by a storage device (e.g., the storage device 220 of FIG. 2). For example, the host 210 may determine the throughput of the GC to be performed in the storage device 220 based on operating system information (e.g., diskstats file information) of the electronic device 101.

In this regard, in operation 611, the host 210 (or, the GC controller 211 of FIG. 2) may obtain write information of the storage device 220. For example, the host 210 may access an operating system (e.g., the operating system 142 of FIG. 1) of the electronic device 101, and obtain (or, read) the write information recorded in the diskstats file of the operating system 142.

According to an embodiment, in operation 613, the host 210 (or, the GC controller 211) may determine a daily write volume based on the write information obtained from the operating system 142, and determine the GC throughput corresponding to the daily write volume. The host 210 may transfer (or, transmit) a command, a signal, and/or data including the determined throughput information of the GC to the storage device 220.

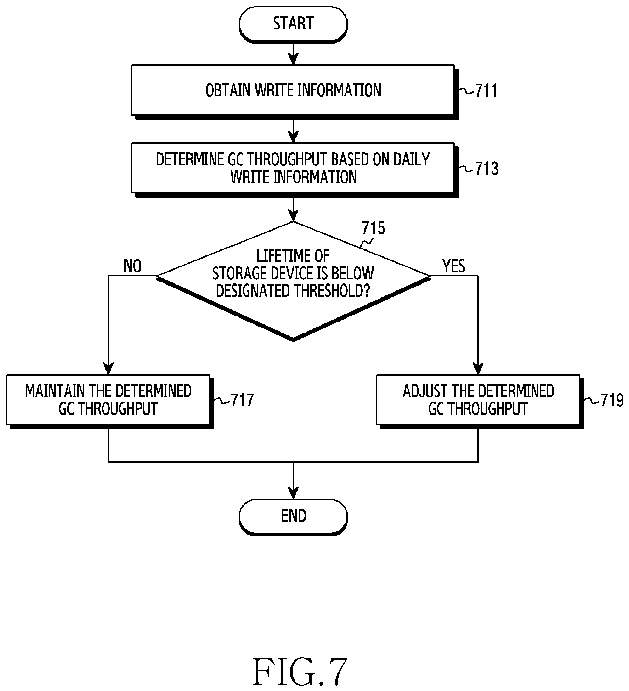

FIG. 7 is a diagram illustrating another example of determining GC throughput according to an embodiment.

Operations of the electronic device described in FIG. 7 may be performed sequentially, but may not necessarily be performed in sequence. For example, the order of operations described in FIG. 7 may be changed, or at least two operations may be performed in parallel.

Referring to FIG. 7, a host (e.g., the host 210 of FIG. 2) of an electronic device (e.g., the electronic device 101 of FIG. 2) according to an embodiment may determine throughput (or the number of free blocks to be secured by performing the GC, or a size of a free space to be secured by performing the GC) of the GC to be performed by a storage device (e.g., the storage device 220 of FIG. 2), and determine whether to adjust the determined GC throughput based on lifetime information of the storage device 220.

In this regard, in operation 711, the host 210 (or, the GC controller 211 of FIG. 2) may obtain write information of the storage device 220. Operation 711 may be identical or similar to operation 611 aforementioned in FIG. 6. For example, the host 210 may obtain (or, read) the write information recorded in a diskstats file of an operating system (e.g., operating system 142 of FIG. 1) of the electronic device 101.

According to an embodiment, in operation 713, the host 210 (or, the GC controller 211) may determine the throughput of the GC. Operation 713 may be identical or similar to operation 613 described above in FIG. 6. For example, the host 210 may determine the daily write volume based on the write information obtained from the operating system 142, and determine the GC throughput corresponding to the daily write volume.

In an embodiment, based on determining the throughput of the GC, in operation 715, the host 210 (or, the GC controller 211) may determine whether the lifetime of the storage device 220 is below a designated threshold. For example, the host 210 may identify the lifetime of the storage device 220 based on erase count information and/or total bytes written (TBW) information of cells included in the blocks of the storage device 220, and determine whether the lifetime of the storage device 220 is smaller than or equal to the designated threshold (e.g., 40 percent).

In an embodiment, if determining that the lifetime of the storage device 220 exceeds the designated threshold, in operation 717, the host 210 (or, the GC controller 211) may maintain the GC throughput corresponding to the determined daily write volume. The host 210 may transfer (or, transmit) a command, a signal, and/or data including the maintained GC throughput information to the storage device 220.

In an embodiment, if determining that the lifetime of the storage device 220 is smaller than or equal to the designated threshold, in operation 719, the host 210 (or, the GC controller 211) may adjust the GC throughput corresponding to the determined daily write volume. For example, the host 210 may reduce the GC throughput corresponding to the daily write volume by a designated value (or, percent). According to various embodiments, the host 210 may include a table which defines an appropriate GC throughput based on the lifetime of the storage device 220. The host 210 may reduce the GC throughput corresponding to the daily write volume by a designated value (or, percent) based on the lifetime and the table of the storage device 220. The host 210 may transfer (or, transmit) a command, a signal, and/or data including the adjusted GC throughput information to the storage device 200.

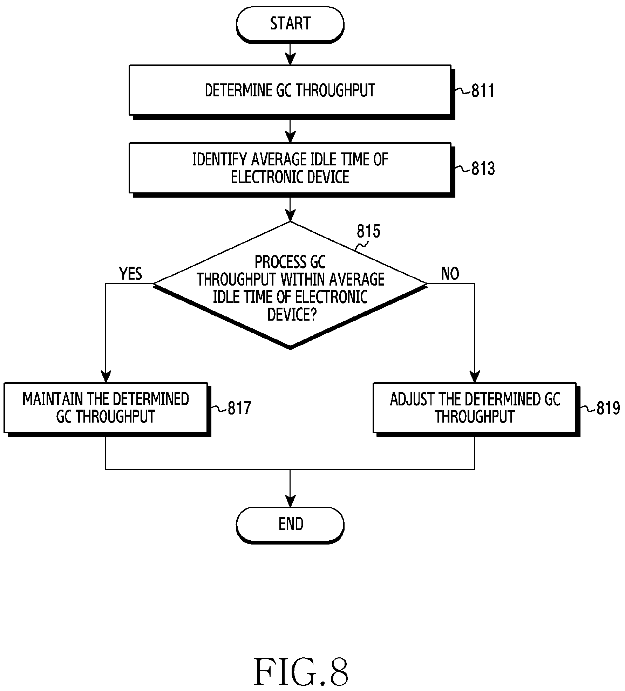

FIG. 8 is a diagram illustrating yet another example of determining GC throughput according to an embodiment.

Operations of the electronic device described in FIG. 8 may be performed sequentially, but may not necessarily be performed in sequence. For example, the order of operations described in FIG. 8 may be changed, or at least two operations may be performed in parallel.

Referring to FIG. 8, a host (e.g., the host 210 of FIG. 2) of an electronic device (e.g., the electronic device 101 of FIG. 2) according to an embodiment may determine throughput (or the number of free blocks to be secured by performing the GC, or a size of a free space to be secured by performing the GC) of the GC to be performed by a storage device (e.g., the storage device 220 of FIG. 2). In addition, the host 210 may determine whether to adjust the determined GC throughput based on state information (e.g., idle state information) of the electronic device 101.

In this respect, in operation 811, the host 210 (or, the GC controller 211 of FIG. 2) may determine the throughput of the GC to be performed in the storage device 220. For example, the host 210 may determine a daily write volume based on write information obtained from an operating system (e.g., the operating system 142 of FIG. 1) of the electronic device 101, and determine the GC throughput corresponding to the daily write volume. Alternatively, the host 210 may determine the GC throughput adjusted from the GC throughput corresponding to the daily write volume based on lifetime information of the storage device 220.

According to an embodiment, based on determining the throughput of the GC, in operation 813, the host 210 (or, the GC controller 211) may identify an average idle time of the electronic device 101. In an embodiment, the host 210 may identify the average idle time in a time range (e.g., late night hours or early morning hours) which is set by the user, or designated by default in the electronic device 101. For example, the host 210 may identify whether there is an IO generated by a program and/or a system service running in the background within the designated time range, and, if determining the presence of the IO, determine the average idle time of the electronic device 101 corresponding to a time interval between IO occurrence periods.

According to an embodiment, based on identifying the average idle time of the electronic device 101, in operation 815, the host 210 (or, the GC controller 211) may determine whether the storage device 220 may process the determined GC throughput within the average idle time of the electronic device 101. For example, the host 210 may determine whether the storage device 220 may process the determined GC throughput within the average idle time of the electronic device 101, based on specifications, performance, average GC throughput, and/or an average GC time of the storage device 220.

In an embodiment, if determining that the storage device 220 may process the determined GC throughput within the average idle time of the electronic device 101, in operation 817, the host 210 (or, the GC controller 211)) may maintain the determined GC throughput. The host 210 may transfer (or, transmit) a command, a signal, and/or data including the maintained throughput information of the GC to the storage device 220.

In an embodiment, if determining that the storage device 220 may not process the determined GC throughput within the average idle time of the electronic device 101, in operation 819, the host 210 (or, the GC controller 211)) may adjust the determined GC throughput. For example, the host 210 may reduce the determined GC throughput by a designated value (or, percent), based on the specifications, the performance, the average GC throughput, and/or the average GC time of the storage device 220. The host 210 may transfer (or, transmit) a command, a signal, and/or data including the adjusted GC throughput information to the storage device 200.

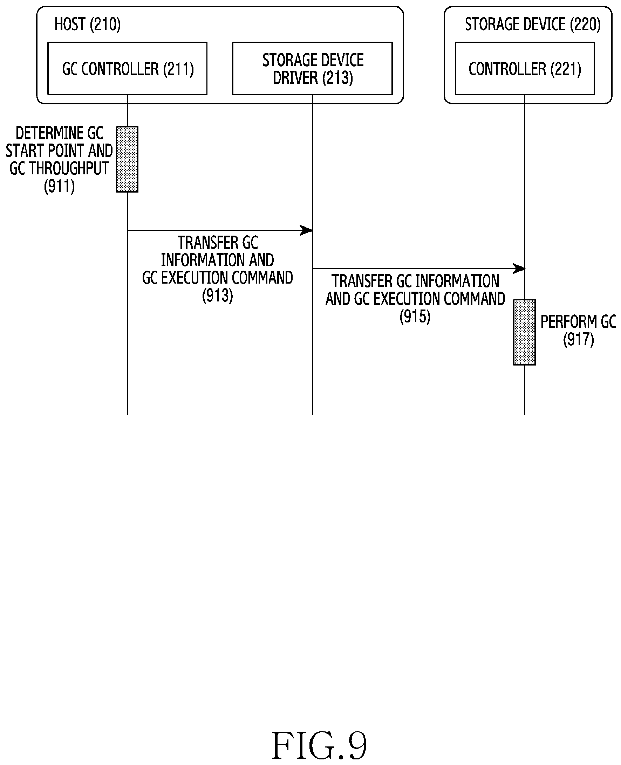

FIG. 9 is a diagram illustrating an example of signal flows between a host and a storage device to perform GC according to an embodiment.

Operations of the electronic device described in FIG. 9 may be performed sequentially, but may not necessarily be performed in sequence. For example, the order of operations described in FIG. 9 may be changed, or at least two operations may be performed in parallel.

Referring to FIG. 9, in operation 911, a host (e.g., the host 210 of FIG. 2) of an electronic device (e.g., the electronic device 101 of FIG. 2) according to an embodiment may determine a start point of the GC (or, GC timing) to be performed by the storage device 220 and GC throughput (or the number of free blocks to be secured by performing the GC, or a size of a free space to be secured by performing the GC). For example, the GC controller 211 of the host 210 may, under the control of the host 210, determine the start point of the GC and the throughput of the GC, based on at least one of time information of the electronic device 101, state information (e.g., idle state information and/or charging state information) of the electronic device 101, state information (e.g., screen active/inactive state information) of a display module (e.g., the display module 160 of FIG. 1), user input reception information indicating to perform the GC, operating system information (e.g., diskstats file information) of the electronic device 101, and lifetime information of the storage device 220.

In an embodiment, based on determining the start point and the throughput of the GC to be performed by the storage device 220, in operation 913 and operation 915, the GC controller 211 of the host 210 may transfer (or, transmit) information related to the start point and the throughput of the GC and a command indicating to perform the GC to the controller 221 of the storage device 220. For example, by transferring (or, transmitting) the information related to the start point and the throughput of the GC and the command indicating to perform the GC to the storage device driver 213 of the host 210, the GC controller 211 of the host 210 may transfer the information and the command for performing the GC to the controller 221 of the storage device 220 through the storage device driver 213 which functions as the interface between the host 210 and the storage device 220. Alternatively, the host 210 may not include the storage device driver 213, and in this case, the GC controller 211 of the host 210 may directly transfer the information and the command for performing the GC to the storage device 220. Alternatively, even if the host 210 includes the storage device driver 213, the GC controller 211 of the host 210 may directly transfer the information and the command for performing the GC to the controller 221 of the storage device 220 by bypassing the storage device driver 213. Hereafter, in describing various embodiments, transferring (or transmitting, or receiving) the command, the signal, and/or the data between the host 210 and the storage device 220 may be applied to all of an embodiment implemented using the storage device driver 213 and an embodiment implemented by bypassing the storage device driver 213.

According to an embodiment, in operation 917, the controller 221 of the storage device 220 may perform the GC, in response to the command indicating to perform the GC transferred (or, received) from the host 210. For example, the controller 221 of the storage device 220 may perform the GC based on the information related to the start point and the throughput of the GC transferred (or received) from the host 210.

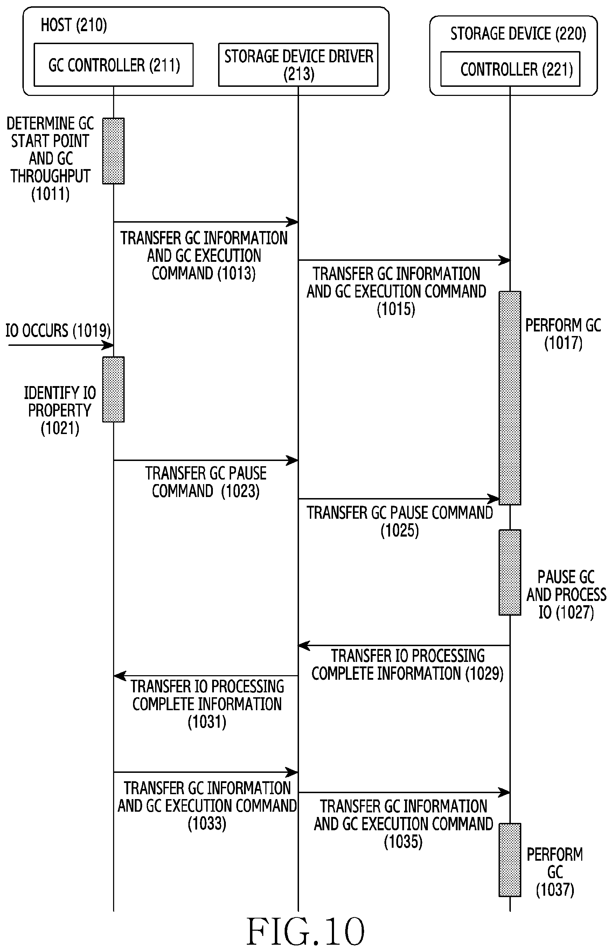

FIG. 10 is a diagram illustrating another example of signal flows between a host and a storage device for performing GC according to an embodiment.

Operations of the electronic device described in FIG. 10 may be performed sequentially, but may not necessarily be performed in sequence. For example, the order of operations described in FIG. 10 may be changed, or at least two operations may be performed in parallel.

Referring to FIG. 10, the host 210 of the electronic device (e.g., the electronic device 101 of FIG. 2) according to an embodiment may dynamically determine priorities for continuing the GC, delaying processing of the IO, at least temporarily pausing the GC, and/or instantly processing the IO, based on a property of an IO occurring while the GC is performed by the storage device 220.

In this regard, in operation 1011, operation 1013, operation 1015, and operation 1017, the GC controller 211 of the host 210 may determine the start point of the GC and the throughput of the GC and transfer (or, transmit) information thereof and a command indicating to perform the GC to the controller 221 of the storage device 220. The controller 221 may perform the GC based on the GC related information and the command transferred (or, received) from the host 210.

According to an embodiment, in operation 1019 and operation 1021, the GC controller 211 of the host 210 may determine (or, monitor) whether an IO occurs while the GC is performed by the storage device 220, and if determining IO occurrence, identify the property of the IO. For example, the GC controller 211 of the host 210 may identify the property of the IO based on information indicated by a flag of the IO.

In an embodiment, if the property of the IO is identified as a first property indicating read or write synch by the flag information of the IO, the GC controller 211 of the host 210 may determine the IO processing with a higher priority than the GC execution, and thus determine to at least temporarily pause the GC and immediately process the IO. In an embodiment, based on determining the IO processing with the higher priority, in operation 1023, operation 1025, and operation 1027, the GC controller 211 of the host 210 may transfer (or, transmit) to the storage device 220 a command indicating to at least temporarily pause the ongoing GC in the storage device 220 and to immediately process the generated IO. The controller 221 of the storage device 220 may pause the GC and process the IO based on the command transferred (or, received).

According to an embodiment, based on pausing the ongoing GC and completing the IO processing, in operation 1029 and operation 1031, the controller 221 of the storage device 220 may transfer (or, transmit) a signal and/or data indicating the IO processing complete to the GC controller 211. For example, the controller 221 of the storage device 220 may transfer information indicating the throughput of the GC processed before the ongoing GC is suspended, together with information indicating the IO processing complete, to the GC controller 211 of the host 210.

According to an embodiment, in response to the transferred (or, received) IO processing complete information and throughput information of the processed GC, in operation 1033 and operation 1035, the GC controller 211 of the host 210 may transfer (or, transmit) a command indicating to resume the suspended GC and remaining throughput information of the GC minus the throughput of the processed GC from the determined GC throughput to the controller 221 of the storage device 220.

According to an embodiment, in operation 1037, the controller 221 of the storage device 220 may resume the GC at least temporarily paused, based on the GC resume command and the GC remaining throughput information transferred (or, received) from the host 210.

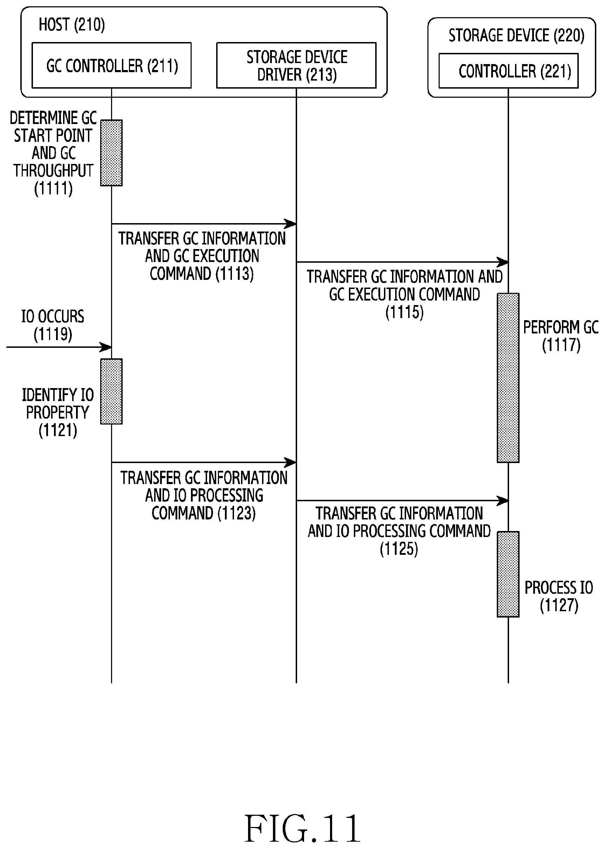

FIG. 11 is a diagram illustrating yet another example of signal flows between a host and a storage device for performing GC according to an embodiment.

Operations of the electronic device described in FIG. 11 may be performed sequentially, but may not necessarily be performed in sequence. For example, the order of operations described in FIG. 11 may be changed, or at least two operations may be performed in parallel.

Referring to FIG. 11, the host 210 of the electronic device (e.g., the electronic device 101 of FIG. 2) according to an embodiment may dynamically determine priorities for continuing the GC, delaying the IO processing, at least temporarily pausing the GC, and/or instantly processing the IO, based on the property of the IO occurring while the GC is performed by the storage device 220.

In this regard, in operation 1111, operation 1113, operation 1115, and operation 1117, the GC controller 211 of the host 210 may determine the start point of the GC and the throughput of the GC and transfer (or, transmit) information thereof and a command indicating to perform the GC to the controller 221 of the storage device 220. The controller 221 may perform the GC based on the GC related information and the command transferred (or, received) from the host 210.

According to an embodiment, in operation 1119 and operation 1121, the GC controller 211 of the host 210 may determine (or, monitor) whether an IO occurs while the GC is performed by the storage device 220, and if determining IO occurrence, identify the property of the IO. For example, the GC controller 211 of the host 210 may identify the property of the IO based on information indicated by a flag of the IO.

In an embodiment, if the property of the IO is identified as a second property indicating asynch of write by the flag information of the IO, the GC controller 211 of the host 210 may determine the GC execution with a higher priority than the IO processing, and thus determine to continue the GC and to delay the IO processing. In an embodiment, based on determining the continuous GC execution with the higher priority, the GC controller 211 of the host 210 may at least temporarily store information of the generated IO in other storage device 220 (e.g., the volatile memory 132 of FIG. 1, a buffer, or a cache memory) which is distinct from the storage device 220.

According to an embodiment, the GC controller 211 of the host 210 may be provided with (or, receive) a signal and/or data indicating GC execution complete from the controller 221 of the storage device 220, and accordingly transfer (or, transmit) information of the IO at least temporarily stored in the other storage device and a command indicating to process the IO to the controller 221 of the storage device 220, in operation 1123 and operation 1125.

According to an embodiment, in operation 1127, the controller 221 of the storage device 220 may process the IO at the time of the GC execution complete, based on the IO information and processing command transferred (or, received) from the host 210.

An electronic device according to an embodiment of the disclosure may include a storage device and a host electrically connected to the storage device.

According to an embodiment, the host may be configured to, determine a start point of GC to be performed by the storage device and throughput of the GC based on at least one information related to the electronic device, transmit information related to the start point of the GC and the throughput of the GC to the storage device based on the determination, identify whether an IO occurs, while the GC is performed by the storage device, identify a property of the IO, determine to delay processing of the IO based on occurrence of the IO, to continue the GC performed by the storage device based on the property of the IO indicating a first property, and control the storage device, such that the storage device at least temporarily pauses the GC and processes the IO based on the property of the IO indicating a second property.

According to an embodiment, the host may be configured to determine the property of the IO as the first property based on a flag of the IO indicating asynch of write, and determine to perform the GC with a higher priority than the IO processing based on determining the property of the IO as the first property.

According to an embodiment, the host may be configured to, based on determining to perform the GC with the higher priority than the IO processing, at least temporarily store the IO in other storage device which is distinct from the storage device.

According to an embodiment, the host may be configured to receive information indicating execution complete of the GC from the storage device and, based on receiving the information indicating the GC execution complete, transmit the IO stored in the other storage device to the storage device.

According to an embodiment, the host may be configured to, based on the flag of the IO indicating read or write synch, determine the property of the IO as the second property, and, based on determining the property of the IO as the second property, determine to process the IO with a higher priority than the GC.

According to an embodiment, the host may be configured to receive from the storage device, information indicating processing complete of the IO and information indicating GC throughput processed before the GC execution is at least temporarily paused, and, based on receiving the information indicating the IO processing complete and the information indicating the processed GC throughput, transmit to the storage device, information indicating to resume the GC at least temporarily paused and information indicating remaining throughput of the GC.

According to an embodiment, the host may be configured to determine whether the electronic device executes a charging function, based on determining that the electronic device executes the charging function, determine whether a screen of the electronic device is in an inactive state, and, based on determining that the screen of the electronic device is in the inactive state, determine the start point of the GC.

According to an embodiment, the host may be configured to determine whether the screen of the electronic device is in an inactive state, based on determining that the screen of the electronic device is in the inactive state, determine whether an idle state of the electronic device is maintained for a designated time, and, based on determining that the idle state of the electronic device is maintained for the designated time, determine the start point of the GC.

According to an embodiment, the host may be configured to obtain write information recorded in an operating system of the electronic device, determine a daily write volume based on the write information, and determine the throughput of the GC based on the daily write volume.

According to an embodiment, the host may be configured to, based on determining the throughput of the GC, identify at least one of a lifetime of the storage device and an average idle time of the electronic device, and, based on at least one of the lifetime of the storage device and the average idle time of the electronic device, adjust the throughput of the GC.

A method for performing GC of an electronic device according to an embodiment may include, based on at least one information related to the electronic device, determining, at a host of the electronic device, a start point of the GC to be performed by the storage device and throughput of the GC, based on the determination, transmitting, at the host, information related to the start point of the GC and the throughput of the GC to the storage device, identifying, at the host, whether an IO occurs, while the GC is performed by the storage device, identifying, at the host, a property of the IO, based on occurrence of the IO, based on the property of the IO indicating a first property, determining, at the host, to delay processing of the IO, to continue the GC performed by the storage device, and, based on the property of the IO indicating a second property, controlling, at the host, the storage device, such that the storage device at least temporarily pauses the GC and processes the IO.

According to an embodiment, determining to delay the processing of the IO may include, based on a flag of the IO indicating asynch of write, determining the property of the IO as the first property, and, based on determining the property of the IO as the first property, determining to perform the GC with a higher priority than the IO processing.

According to an embodiment, determining to perform the GC with the higher priority than the IO processing may include at least temporarily storing the IO in other storage device which is distinct from the storage device.

According to an embodiment, the method for performing the GC may further include receiving information indicating execution complete of the GC from the storage device, and, based on receiving the information indicating the GC execution complete, transmitting the IO stored in the other storage device to the storage device.

According to an embodiment, controlling the storage device may include, based on the flag of the IO indicating read or write synch, determining the property of the IO as the second property, and, based on determining the property of the IO as the second property, determining to process the IO with a higher priority than the GC.

According to an embodiment, the method for performing the GC may further include receiving from the storage device, information indicating the IO processing complete and information indicating GC throughput processed before the GC is at least temporarily paused, and, based on receiving the information indicating the IO processing complete and the information indicating the processed GC throughput, transmitting to the storage device, information indicating to resume the GC at least temporarily paused and information indicating remaining throughput of the GC.

According to an embodiment, determining the start point of the GC may include determining whether the electronic device executes a charging function, based on determining that the electronic device executes the charging function, determining whether a screen of the electronic device is in an inactive state, and, based on determining that the screen of the electronic device is in the inactive state, determining the start point of the GC.

According to an embodiment, determining the start point of the GC may include determining whether the screen of the electronic device is in an inactive state, based on determining that the screen of the electronic device is in the inactive state, determining whether an idle state of the electronic device is maintained for a designated time, and, based on determining that the idle state of the electronic device is maintained for the designated time, determining the start point of the GC.

According to an embodiment, determining the throughput of the GC may include obtaining write information recorded in an operating system of the electronic device, determining a daily write volume based on the write information, and determining the throughput of the GC based on the daily write volume.

According to an embodiment, determining the throughput of the GC may include identifying at least one of a lifetime of the storage device and an average idle time of the electronic device, and adjusting the throughput of the GC based on at least one of the lifetime of the storage device and the average idle time of the electronic device.

According to an embodiment of the disclosure, a mechanism for dynamically determining a GC start point and GC throughput based on at least one information related to an electronic device may be provided.

In addition, according to an embodiment of the disclosure, a mechanism for dynamically determining control on GC execution or IO processing based on a property of the IO occurring in the GC execution.

In addition, according to an embodiment of the disclosure, efficient management and optimization of free blocks (or, a free space) of a storage device may be achieved based on dynamic determination or dynamic control of a host on GC execution.

In addition, according to an embodiment of the disclosure, it is possible to prevent IO processing delay or execution speed slowdown of a program related to the IO according to GC performed by a storage device itself based on dynamic determination or dynamic control of a host on GC execution.

In addition, according to an embodiment of the disclosure, since a storage device performs GC at required by a host, it is possible to prevent deterioration of lifetime or performance of a storage device due to a GC execution frequency of the storage device itself.

Effects obtainable from the disclosure are not limited to the above-mentioned effects, and other effects which are not mentioned may be clearly understood by those skilled in the art of the disclosure through the following descriptions.

## Claims

1. An electronic device comprising:
a storage device; and
a host electrically connected to the storage device,
wherein the host is configured to:
based on at least one information related to the electronic device, determine a start point of garbage collection (GC) to be performed by the storage device and throughput of the GC,
based on the determination, transmit information related to the start point of the GC and the throughput of the GC to the storage device,
identify whether an input/output (IO) occurs, while the GC is performed by the storage device,
identify a property of the IO, based on occurrence of the IO,
based on the property of the IO indicating a first property, determine to delay processing of the IO, to continue the GC performed by the storage device, and
based on the property of the IO indicating a second property, control the storage device, such that the storage device at least temporarily pauses the GC and processes the IO.

2. The electronic device of claim 1, wherein the host is configured to:
based on a flag of the IO indicating asynch of write, determine the property of the IO as the first property, and
based on determining the property of the IO as the first property, determine to perform the GC with a higher priority than the IO processing.

3. The electronic device of claim 2, wherein the host is configured to:
based on determining to perform the GC with the higher priority than the IO processing, at least temporarily store the IO in other storage device which is distinct from the storage device,
receive information indicating execution complete of the GC from the storage device, and
based on receiving the information indicating the GC execution complete, transmit the IO stored in the other storage device to the storage device.

4. The electronic device of claim 1, wherein the host is configured to:
based on the flag of the IO indicating read or write synch, determine the property of the IO as the second property, and
based on determining the property of the IO as the second property, determine to process the IO with a higher priority than the GC.

5. The electronic device of claim 4, wherein the host is configured to:
receive from the storage device, information indicating processing complete of the IO and information indicating GC throughput processed before the GC execution is at least temporarily paused, and
based on receiving the information indicating the IO processing complete and the information indicating the processed GC throughput, transmit to the storage device, information indicating to resume the GC at least temporarily paused and information indicating remaining throughput of the GC.

6. The electronic device of claim 1, wherein the host is configured to:
determine whether the electronic device executes a charging function,
based on determining that the electronic device executes the charging function, determine whether a screen of the electronic device is in an inactive state, and
based on determining that the screen of the electronic device is in the inactive state, determine the start point of the GC.

7. The electronic device of claim 1, wherein the host is configured to:
determine whether the screen of the electronic device is in an inactive state,
based on determining that the screen of the electronic device is in the inactive state, determine whether an idle state of the electronic device is maintained for a designated time, and
based on determining that the idle state of the electronic device is maintained for the designated time, determine the start point of the GC.

8. The electronic device of claim 1, wherein the host is configured to:
obtain write information recorded in an operating system of the electronic device,
based on the write information, determine a daily write volume,
based on the daily write volume, determine the throughput of the GC,
based on determining the throughput of the GC, identify at least one of a lifetime of the storage device and an average idle time of the electronic device, and
based on at least one of the lifetime of the storage device and the average idle time of the electronic device, adjust the throughput of the GC.

9. A method for performing garbage collection (GC) of an electronic device, comprising:
based on at least one information related to the electronic device, determining, at a host of the electronic device, a start point of the GC to be performed by a storage device of the electronic device and throughput of the GC;
based on the determination, transmitting, at the host, information related to the start point of the GC and the throughput of the GC to the storage device;
identifying, at the host, whether an input/output (IO) occurs, while the GC is performed by the storage device;
identifying, at the host, a property of the IO, based on occurrence of the IO;
based on the property of the IO indicating a first property, determining, at the host, to delay processing of the IO, to continue the GC performed by the storage device; and
based on the property of the IO indicating a second property, controlling, at the host, the storage device, such that the storage device at least temporarily pauses the GC and processes the IO.

10. The method for performing the GC of claim 9, wherein determining to delay the processing of the IO comprises:
based on a flag of the IO indicating asynch of write, determining the property of the IO as the first property; and
based on determining the property of the IO as the first property, determining to perform the GC with a higher priority than the IO processing.

11. The method for performing the GC of claim 10, wherein determining to perform the GC with the higher priority than the IO processing comprises:
at least temporarily storing the IO in other storage device which is distinct from the storage device,
the method for performing the GC further comprising:
receiving information indicating execution complete of the GC from the storage device; and
based on receiving the information indicating the GC execution complete, transmitting the IO stored in the other storage device to the storage device.

12. The method for performing the GC of claim 9, wherein controlling the storage device comprises:
based on the flag of the IO indicating read or write synch, determining the property of the IO as the second property; and
based on determining the property of the IO as the second property, determining to process the IO with a higher priority than the GC.

13. The method for performing the GC of claim 12, further comprising:
receiving from the storage device, information indicating the IO processing complete and information indicating GC throughput processed before the GC is at least temporarily paused; and
based on receiving the information indicating the IO processing complete and the information indicating the processed GC throughput, transmitting to the storage device, information indicating to resume the GC at least temporarily paused and information indicating remaining throughput of the GC.

14. The method for performing the GC of claim 9, wherein determining the start point of the GC comprises:
determining whether the electronic device executes a charging function;
based on determining that the electronic device executes the charging function, determining whether a screen of the electronic device is in an inactive state; and
based on determining that the screen of the electronic device is in the inactive state, determining the start point of the GC, or
determining whether the screen of the electronic device is in an inactive state;
based on determining that the screen of the electronic device is in the inactive state, determining whether an idle state of the electronic device is maintained for a designated time; and
based on determining that the idle state of the electronic device is maintained for the designated time, determining the start point of the GC.

15. The method for performing the GC of claim 9, wherein determining the throughput of the GC comprises:
obtaining write information recorded in an operating system of the electronic device;
based on the write information, determining a daily write volume;
based on the daily write volume, determining the throughput of the GC;
identifying at least one of a lifetime of the storage device and an average idle time of the electronic device; and
based on at least one of the lifetime of the storage device and the average idle time of the electronic device, adjusting the throughput of the GC.
